# EUROPEAN PATENT SPECIFICATION

(11) **EP 2 998 165 B1**
(45) Date of publication and mention of the grant of the patent: **28.06.2017**
(21) Application number: 15183352.2
(22) Date of filing: 01.09.2015
(51) Int. Cl.: B60R 15/04, C02F 103/00

(54) **DOSAGE DISPENSER FOR A WASTE HOLDING TANK HAVING A POUR SPOUT**
DOSISSPENDER FÜR ABFALLAUFNEHMENDEN TANK MIT EINEM AUSGIESSER
DISTRIBUTEUR DOSEUR POUR UN RÉSERVOIR À DÉCHETS PRÉSENTANT UN BEC VERSEUR

(30) Priority: 16.09.2014 US 201462050924 P
(43) Date of publication of application: 23.03.2016
(73) Proprietor: Thetford BV, 4870 AD Etten-Leur (NL)
(72) Inventor: VAN HOOF, Yannick, 4891 XP Rijsbergen (NL); KUIJTEN, Pascal, 4812 LT Breda (NL); BRASPENNING, Richard, 4741 AW Hoeven (NL); DE ROOS, Maarten, 6631 AZ Horssen (NL)
(74) Representative: Dietz, Christopher Friedrich

(56) References cited:
- US-A- 2 960 259
- US-A- 3 245 589
- US-B1- 6 189 161

## Description

### FIELD

The present disclosure generally relates to a dosage dispenser for a waste holding tank having a pour spout.

### BACKGROUND

This section provides background information related to the present disclosure.

Various waste holding devices are known. For example, removable or mobile waste holding tanks may be typically positioned within an interior compartment of a caravan or RV to cooperate with a toilet. Waste may be transferred from the toilet to the holding tank where it is stored. The holding tank can be conveniently removed from the RV through an exterior access door and then transported to a waste disposal site for emptying.

In other waste holding arrangements, a portable toilet may include a seat section separately mounted onto a holding tank section. The seat section may include a bowl, and overlying seat and a cover. A discharge opening is located at the bottom of the bowl so as to be in registry with an inlet opening in the holding tank section when the two sections are mounted to one another. Waste may be collected in the holding tank and periodically emptied from the holding tank.

In a conventional manner, waste holding tanks (including but not limited to the types described above) may be dosed with additives to control odor, for example. One such additive is commercially available from the assignee of this application under the trademark AQUA KEM^{®}.

While known additives have proven to be successful for controlling waste holding tank odors, a continuous need in the relevant art remains. For example, it remains desirable to provide a dispenser for such additives which is easily used and does not require opening of the waste holding tank for periodic dosing thereof.

### SUMMARY

This section provides a general summary of the disclosure, and is not a comprehensive disclosure of its full scope or all of its features.

In accordance with the invention, the present teachings provide a dosage dispenser for a waste holding tank having a pour out spout in communication with a waste chamber. The dosage dispenser includes a dosage housing carried by the pour spout and a plurality of dosages in the housing. The plurality of dosages each include a holding tank additive. The dosage dispenser is operable by a user to release a single dosage of the plurality of dosages into the waste chamber in response to a user action.

In accordance with a particular embodiment, the present teachings provide a dosage dispenser for a waste holding tank having a pour out spout in communication with a waste chamber. The dosage dispenser includes a plurality of capsules, a lower portion and an upper portion. The plurality of capsules each include a holding tank additive. The lower portion is sized to be received within the pour out spout. The lower portion carries the plurality of capsules. The upper portion is connected to the lower portion. The upper portion is adapted to release a single dosage of the plurality of dosages into the waste chamber in response to an action of the user. The dosage dispenser is releasable engageable with the waste holding tank and the dosages may be individually dosed into the waste chamber without opening the pour out spout.

In accordance with another embodiment, the present teachings provide a dosage dispenser for a waste holding tank having a pour out spout in communication with a waste chamber. The dosage dispenser includes a dosage housing carried by a side of the pour out spout of the waste holding tank and a plurality of dosages each including a holding tank additive, each dosage aligning with an opening in the side of the pour out spout, wherein the dosage dispenser is releasably engageable with the waste holding tank and the dosages may be dosed into the waste chamber without opening the pour out spout without opening the pour out spout.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Figure 1A is a side view of a mobile holding tank including a dosage dispenser in accordance with the present teachings.
Figure 1B is a top view of the mobile holding tank including a dosage dispenser of Figure 1.
Figure 2 is a perspective view of a holding tank of a portable toilet including a dosage dispenser in accordance with the present teachings.
Figure 3 is an exploded, perspective view of the mobile holding tank and dosage dispenser of Figure 1.
Figure 4 is another perspective view of the mobile holding tank and dosage dispenser of Figure 1.
Figure 5 is an enlarged perspective view of a dosage dispenser in accordance with the present teachings, the dosage dispenser shown retaining a plurality of dosages and dispensing a single dose.
Figure 6 is an enlarged perspective view of a another dosage dispenser in accordance with the present teachings.
Figure 7 is a perspective view of another dosage dispenser in accordance with the present teachings, the dosage dispenser shown operatively associated with a pour spout of a waste holding tank.
Figure 8 is another perspective view of the dosage dispenser and pour spout of Figure 7.
Figure 9 is an exploded view of a portion of the dosage dispenser and pour spout of Figures 7 and 8.
Figure 10 is a cross-sectional view taken through a portion of the dosage dispenser and pour spout of Figure 7.
Figure 11 is another cross-sectional view taken through a portion of the dosage dispenser and pour spout of Figure 7.
Figure 12 is another cross-sectional view taken through a portion of the dosage dispenser and pour spout of Figure 7.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The present teachings are particularly directed to a dosage dispenser 10 for a waste holding tank. The dosage dispenser 10 may be used with various types of waste holding tanks. Before addressing the details of the dosage dispensers of the present teachings, exemplary waste holding tanks for use with the dosage dispensers will be briefly described.

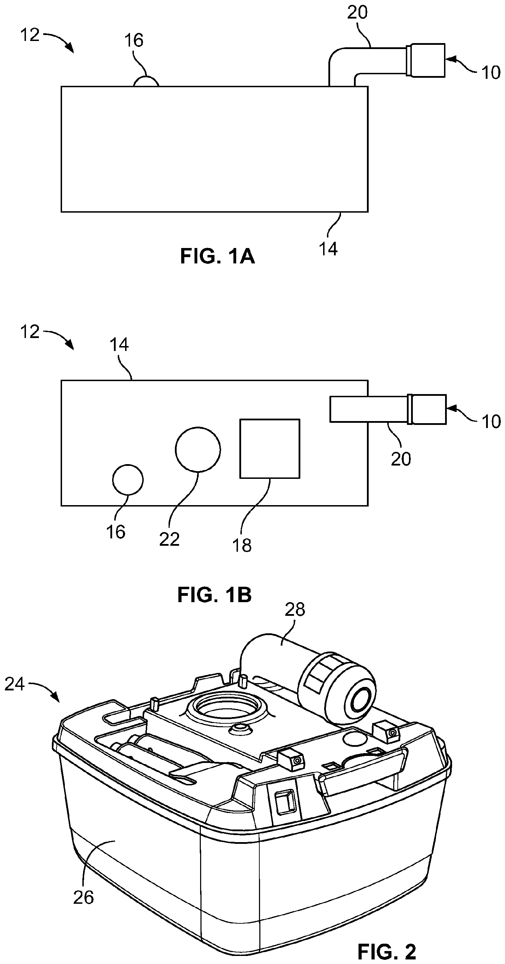

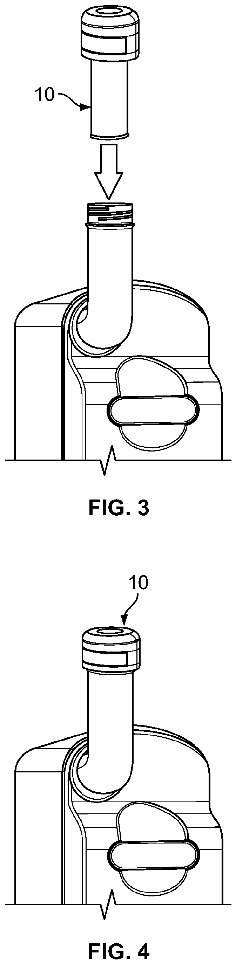

Figures 1A, 1B, 3 and 4 illustrate an exemplary waste holding tank 12 of the type that may be positioned within an interior compartment of a caravan or RV to cooperatively engage a toilet of the caravan or RV and receive waste from the toilet. In this manner, a caravan operator may remove the holding tank from the caravan through a small door in a wall of the caravan. Suitable waste holding tanks are manufactured and sold by Thetford Corporation. Furthermore, such waste holding tanks are shown and described in commonly assigned U.S. Patent Nos. 6,189,161; 7,293,298 and 8,225,819. It will be appreciated, however, that the system of the present teachings may be adapted to interface with any other type of portable waste holding tank. Briefly, the portable waste holding tank 12 will be understood to conventionally include a housing 14, an opening knob 16, a sliding cover 18, a pour out spout 20 and a blade opening 22. The pour out spout 20 may be rotatable relative to the housing 14. Waste from the waste storage chamber may be emptied periodically through the pour out spout 20.

Figure 2 illustrates a waste holding tank 24 particularly intended for a portable toilet. Similar to the removable holding tank 12 of Figures 1A, 1B, 3 and 4, the waste holding tank 24 of Figure 2 includes a housing defining a waste storage chamber and a pour out spout 28 in fluid communication with the waste storage chamber. Again, waste from the waste storage chamber may be periodically emptied through the pour out spout 28 and the pour out spout 28 may be rotatable relative to the housing 26.

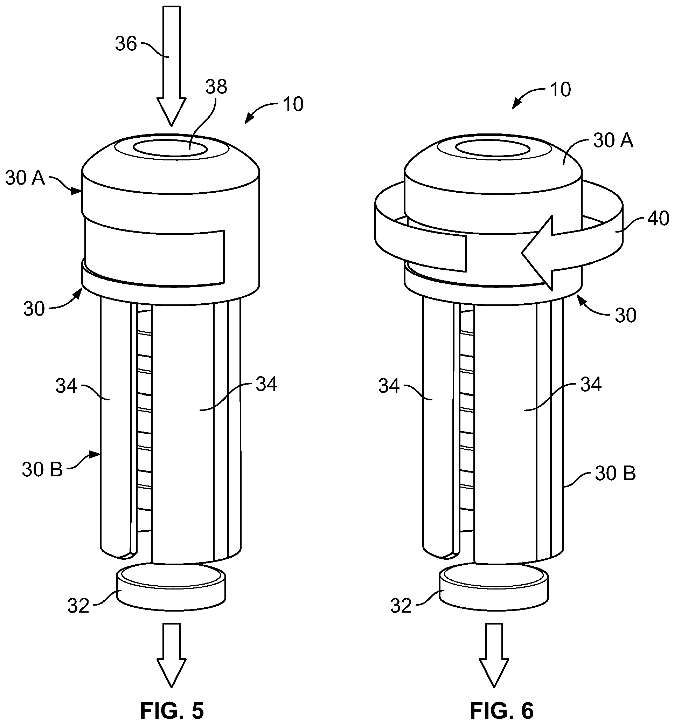

With continued reference to Figures 1-4 and additional reference to Figures 5 and 6, a first dosage dispenser 10 in accordance with the present teachings will now be further described. Given the similarities of the pour out spouts 20, 28 of the two waste holding tanks 12, 24 illustrated in the drawings, it will be understood by those skilled in the art, that the dosage dispenser 10 of the present teachings may be used in an identical manner with both types of holding tanks 12, 24.

The dosage dispenser 10 is illustrated to generally include a dosage housing 30 carried by the pour out spout 20, 28 and a plurality of dosages or capsules 32. The dosage housing 30 includes an upper portion 30A and a lower portion 30B. The capsules may be holding tank additives. The holding tank additives may be odor controlling additives. For particular applications, the capsules 32 may be used to suppress unpleasant odors, reduce the build-up of gasses, keep the waste chamber of the holding tank 12, 24 pure and clean, break down solids and toilet paper to facilitate emptying of the waste holding tank 12, 24, etc.

The lower portion 30B of the dosage housing 30 may be generally cylindrical in shape and may be sized to be received within a correspondingly cylindrical opening defined by the pour out spout 20, 28 of a waste holding tank 12, 24. The lower portion 30B may carry normally the plurality of capsules 32. As shown, the lower portion 30A may include two or more downwardly extending arms 34.

The upper portion 30A may be connected to the lower portion 30B. The upper portion 30A may be adapted to individually release a single capsule 32 of the plurality of capsules into the waste chamber of the holding tank 12, 24 in response to an action of the user. As indicated by the arrow 36 in Figure 5, the action of the user to release the single capsule 32 may be depression of a button 38 or other actuation element carried by the upper portion.

The action of the user to release the single dosage 32 from the dosage dispenser 10 may alternatively be rotation of the upper portion 30A relative to the lower portion 30B. This relative movement is shown at arrow 40 of Figure 6. In such an embodiment, the dosage dispenser 10 may be configured such that rotation of the upper portion 30 relative to the lower portion 30B translates an associated plunger or controls another device to downwardly displace the plurality of dosages sufficiently such that the lowermost single dosage 32 is released from the lower portion 30B of the dosage housing 30.

The dosage dispenser 10 may be releasably attached to the pour out spout 20, 28 of the holding tank 12, 24. In this manner, the dosage dispenser 10 may be readily removed from the pour out spout 20, 28 for emptying of the holding tank 12, 24 or refilling of the dosage dispenser 10. For example, the pour out spout 20, 28 and the dosage dispenser 10 may include cooperating threads for attachment. Alternatively, the lower portion 30B of the dosage dispenser 10 may be press-fit into the pour out spout 20, 28. In this regard, the arms 34 of the lower portion 38 may resiliently deflect upon insertion into the pour out spout 20, 28. An outward bias of the arms 34 may retain the capsule dispenser 10 in the pour out spout 20, 28. The dosage dispenser 10 closes the pour out spout 20, 28 when engaged with the waste holding tank to thereby prevent odor from escaping the waste holding tank 12, 24 and prevent the spillage of contents from the waste holding tank 12, 24.

Accordingly, the dosage dispenser 10 provides for convenient storage of chemical additive for the waste holding tank 12, 24 within the pour out spout 20, 28 of the waste holding tank 12, 24. The dosage dispenser 10 is convenient and easy to use. There are no dirty hands and no tools are required. The dosage dispenser 10 ensures that a proper dosage of additives 32 is delivered to the waste chamber of the holding tank 12, 24. The chemical composition of the additives 32 carried by the dosage dispenser 10 may be similar to additives commercially available from the assignee of this application under the trademark AQUA KEM®. It will be understood, however, that other additives may be used within the scope of the present teachings.

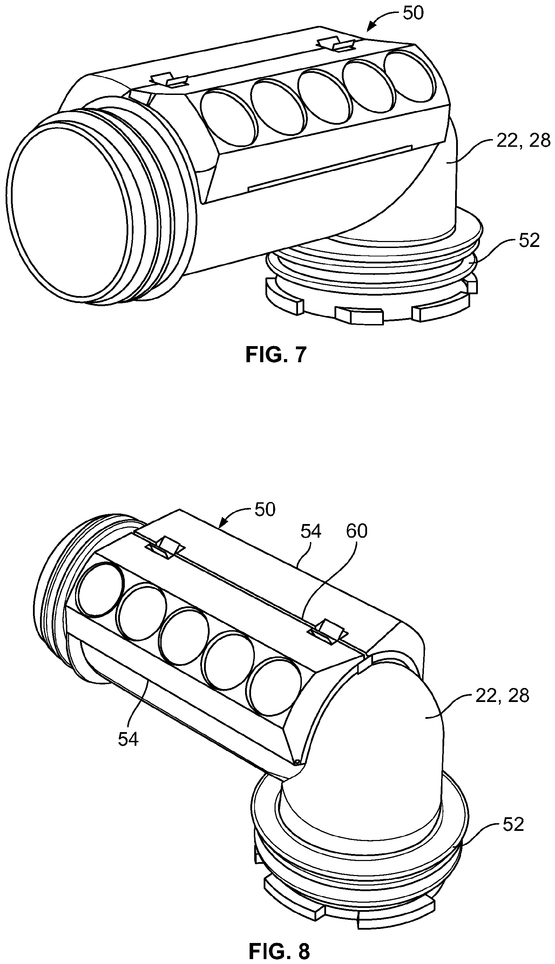

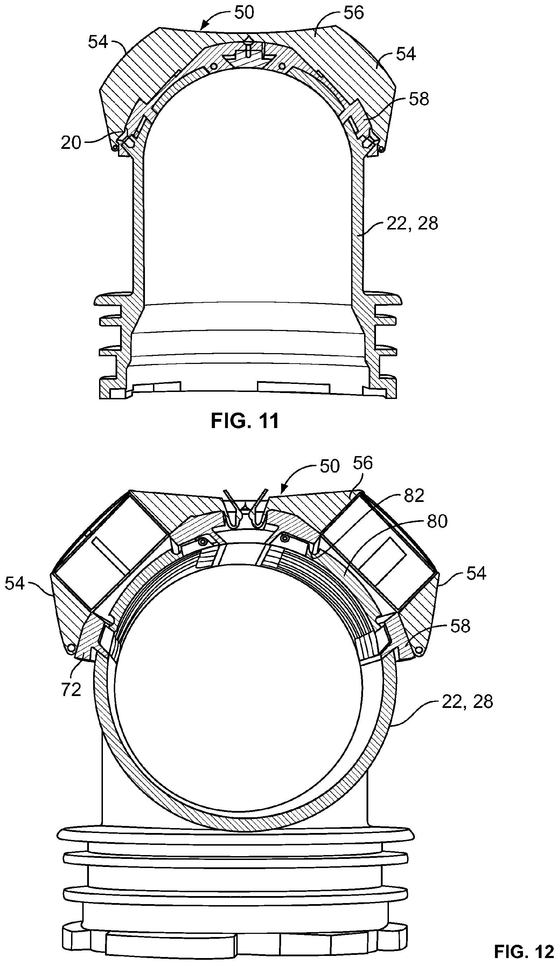

Turning to Figures 7 through 12, another dosage dispenser in accordance with the present teachings is illustrated and generally identified at reference character 50 will be described. The dosage dispenser 50 is again shown operatively associated with a pour spout 22, 28 of a waste holding tank. It will be understood that the waste holding tank 12, 24 may be similar to those described above. Given the similarities between the dosage dispenser 10 and the dosage dispenser 50, like reference characters may be used to identify similar elements. A proximal end 52 of the pour spout may releasably engage the holding tank in a conventional manner. In this regard, the pour spout may rotatably engage the holding tank with a bayonet or other connection. In this and the prior embodiment, it will be understood that the pour spout 22, 28 and holding tank 12, 24 are conventional insofar as the present teachings are concerned to the extent not otherwise described herein.

The dosage dispenser 50 is generally shown to include a pair of dosage housings 54. Each dosage housing 54 has a first body part 56 and a second body part 58. The first and second body parts 56 and 58 may be unitarily constructed of a plastic material and joined to one another through a living hinge or hinge bar 60. It will be understood that both of the two housings 54 are substantially identical and further understood that the present invention may alternatively include only a single housing 54.

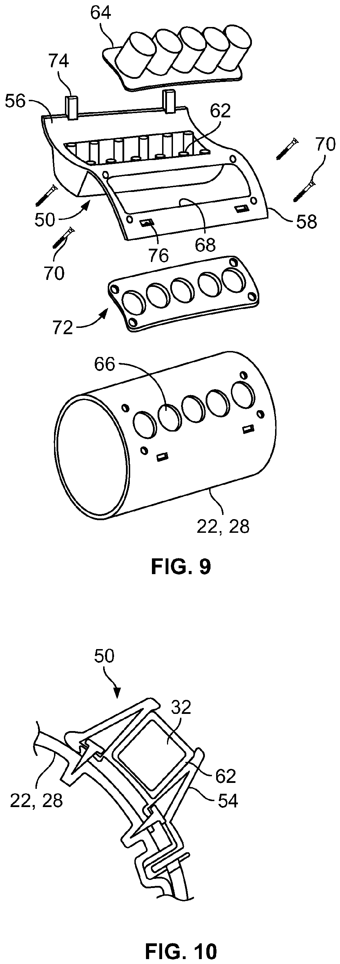

The first body part 56 of the housing 54 defines a cavity 62 for receiving a plurality of doses 32 of additives for the holding tank. As illustrated in Figure 9, the doses 32 may be provided in a strip 64 and individually separated. In the embodiment illustrated, the strip 64 may include five doses 32. It will be understood, however, that a greater or lesser number of doses 32 may be provided within the scope of the present teachings. The strip 64 may define a blister-type package. Alternatively, the doses 32 may be individually located into the housing 50.

The pour spout 22, 28 defines a plurality of openings 66 that register or align with the plurality of doses 32. Thus, in the embodiment illustrated, the pour at spout 22, 28 defines five openings 66 associated with both of the housings 50. Alternatively, the pour out spout 22, 28 may define a single, elongated opening.

The second body part 58 of the housing 54 includes a concave lower surface adapted to mate with the cylindrical exterior of the pour spout 22, 28. A window is defined by the second body part 58 that will provide communication between the doses 32 and the openings of the pour spout 22, 28. While the second body part 58 includes a single opening 68, it may alternatively include individual openings corresponding to each of the doses 32.

The second body part 58 may be attached to the pour out spout 22, 28 with a plurality of fasteners 70. A rubber gasket 72 may be positioned between the second body part 58 and the pour out spout 22, 28 for suitable sealing. After attachment of the second body part 58 with the pour out spout 22, 28, the first body part 56 is rotated relative to the second body part 58 such that the second body part 58 is positioned between the first body part 56 and the pour out spout 22, 28. The first body part 56 may be formed to include one or more retention features or clickers 74 that snap into corresponding apertures 76 defined by the second body part 58 to retain the housing 50 in a closed orientation.

The openings 66 defined by the pour out spout 22, 28 may each be associated with a valve 80 with a rubber seal 82. The valves 80 may be spring-loaded valves that create a water-tight closing for the strip 64. In operation, the user may push a single dose 32 of additive through the strip 64 and the valve 80. In this manner, the user may simply and conveniently dose one pre-measured quantity of additive into the waste holding tank 12, 24 without any tools.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A dosage dispenser 10 for a waste holding tank 12, 24 having a pour out spout 22, 28 in communication with a waste chamber, the dosage dispenser 10, **characterized by**:
a dosage housing 30 carried by the pour out spout 22, 28; and
a plurality of dosages 32 disposed in the housing 30, the dosages of the plurality of dosages 32 each including a holding tank additive;
wherein the dosage dispenser 10, is operable by a user to release a single dosage 32 of the plurality of dosages into the waste chamber in response to a user action.

2. The dosage dispenser for a waste holding tank of claim 1, **characterized in that** the dosage dispenser includes:
a lower portion 30B sized to be received within the pour out spout, 22, 28 the lower portion 30B carrying the plurality of dosages 32; and
an upper portion 30A connected to the lower portion 30B, the upper portion 30A adapted to release the single dosage 32 of the plurality of dosages into the waste chamber in response to the user action;
wherein the dosage dispenser 10 is releasably engageable with the waste holding tank 12, 24 and the dosages 32 may be dosed into the waste chamber without opening the pour out spout 22, 28.

3. The dosage dispenser for a waste holding tank according to any of the preceding claims, **characterized in that** the holding tank additive is an odor controlling additive.

4. The dosage dispenser for a waste holding tank according to claim 2 or 3, **characterized in that** the lower portion 30B is generally cylindrical.

5. The dosage dispenser for a waste holding tank according to any of the preceding claims, **characterized in that** the dosage dispenser closes the pour out spout 22, 28 when engaged with the waste holding tank 12, 24 to thereby prevent odor from escaping the waste holding tank 12, 24.

6. The dosage dispenser for a waste holding tank according to claim 2, **characterized in that** the user rotates the upper portion 30A relative to the lower portion 30B to release the single dosage 32 into the waste chamber.

7. The dosage dispenser for a waste holding tank according to claim 2, **characterized in that** the user pushes a button 38 carried by the upper portion 30A to release the single dosage 32 into the waste chamber.

8. The dosage dispenser for a waste holding tank according to claim 1, **characterized in that** the dosage housing is carried by a side of the pour out spout 22, 28 of the waste holding tank 12, 24 and each dosage 32 is aligning with an opening in the side of the pour out spout 22, 28.

9. The dosage dispenser for a waste holding tank according to claim 8, **characterized in that** the pour out spout 22, 28 includes a plurality of openings corresponding in number to and aligning with the plurality of dosages 32.

## Patentansprüche

1. Dosisausgabevorrichtung (10) für einen Abfallauffangtank (12, 24), der eine Abflusstülle (22, 28) aufweist, die mit einer Abfallkammer in Strömungsverbindung steht, wobei die Dosisausgabevorrichtung (10) **gekennzeichnet ist durch**:
ein Dosiergehäuse (30), das **durch** die Abflusstülle (22, 28) getragen wird; und
eine Vielzahl von Dosen (32), die in dem Gehäuse (30) angeordnet sind, wobei die Dosen der Vielzahl von Dosen (32) jeweils ein Auffangtankadditiv enthalten,
wobei die Dosisausgabevorrichtung (10) **durch** einen Nutzer betätigt werden kann, um in Reaktion auf eine Aktion des Nutzers eine einzelne Dosis (32) der Vielzahl von Dosen in die Abfallkammer hinein frei zu geben.

2. Dosisausgabevorrichtung für einen Abfallauffangtank nach Anspruch 1, **dadurch gekennzeichnet, dass** die Dosisausgabevorrichtung Folgendes umfasst:
einen unteren Abschnitt (30B), der dafür bemessen ist, innerhalb der Abflusstülle (22, 28) aufgenommen zu werden, wobei der untere Abschnitt (30B) die Vielzahl von Dosen (32) trägt; und
einen oberen Abschnitt (30A), der mit dem unteren Abschnitt (30B) verbunden ist, wobei der obere Abschnitt (30A) dafür ausgelegt ist, in Reaktion auf die Aktion des Nutzers die einzelne Dosis (32) der Vielzahl von Dosen in die Abfallkammer hinein frei zu geben,
wobei die Dosisausgabevorrichtung (10) lösbar mit dem Abfallauffangtank (12, 24) in Eingriff bringbar ist und die Dosen (32) in die Abfallkammer hinein dosiert werden können, ohne die Abflusstülle (22, 28) zu öffnen.

3. Dosisausgabevorrichtung für einen Abfallauffangtank nach einem der vorangehenden Ansprüche, **dadurch gekennzeichnet, dass** das Auffangtankadditiv ein Geruchskontrolladditiv ist.

4. Dosisausgabevorrichtung für einen Abfallauffangtank nach Anspruch 2 oder 3, **dadurch gekennzeichnet, dass** der untere Abschnitt (30B) allgemein zylindrisch ist.

5. Dosisausgabevorrichtung für einen Abfallauffangtank nach einem der vorangehenden Ansprüche, **dadurch gekennzeichnet, dass** die Dosisausgabevorrichtung die Abflusstülle (22, 28) schließt, wenn sie mit dem Abfallauffangtank (12, 24) im Eingriff steht, um dadurch zu verhindern, dass Geruch aus dem Abfallauffangtank (12, 24) entweicht.

6. Dosisausgabevorrichtung für einen Abfallauffangtank nach Anspruch 2, **dadurch gekennzeichnet, dass** der Nutzer den oberen Abschnitt (30A) relativ zu dem unteren Abschnitt (30B) dreht, um die einzelne Dosis (32) in die Abfallkammer hinein frei zu geben.

7. Dosisausgabevorrichtung für einen Abfallauffangtank nach Anspruch 2, **dadurch gekennzeichnet, dass** der Nutzer einen Knopf (38) drückt, der durch den oberen Abschnitt (30A) getragen wird, um die einzelne Dosis (32) in die Abfallkammer hinein frei zu geben.

8. Dosisausgabevorrichtung für einen Abfallauffangtank nach Anspruch 1, **dadurch gekennzeichnet, dass** das Dosiergehäuse durch eine Seite der Abflusstülle (22, 28) des Abfallauffangtanks (12, 24) getragen wird und jede Dosis (32) auf eine Öffnung in der Seite der Abflusstülle (22, 28) fluchtend ausgerichtet ist.

9. Dosisausgabevorrichtung für einen Abfallauffangtank nach Anspruch 8, **dadurch gekennzeichnet, dass** die Abflusstülle (22, 28) eine Vielzahl von Öffnungen aufweist, deren Anzahl der Vielzahl von Dosen (32) entspricht und die auf die Vielzahl von Dosen (32) fluchtend ausgerichtet sind.

## Revendications

1. Distributeur doseur (10) pour un réservoir à déchets (12, 24) comportant un bec verseur (22, 28) en communication avec une chambre à déchets, le distributeur doseur (10) étant **caractérisé par** :
un logement pour doses (30) porté du bec verseur (22, 28) ; et
une pluralité de doses (32) disposées dans le logement (30), les doses de la pluralité de doses (32) renfermant chacune un additif pour bac à déchets ;
dans lequel le distributeur doseur (10) peut être actionné par un utilisateur pour libérer une dose unique (32) de la pluralité de doses dans la chambre à déchets, en réponse à une action de l'utilisateur.

2. Distributeur doseur pour un réservoir à déchets selon la revendication 1, **caractérisé en ce que** le distributeur doseur comporte :
une partie inférieure (30B) dimensionnée pour être reçue à l'intérieur du bec verseur (22, 28), la partie inférieure (30B) portant la pluralité de doses (32) ; et
une partie supérieure (30A) reliée à la partie inférieure (30B), la partie supérieure (30A) étant conçue pour libérer la dose unique (32) de la pluralité de doses dans la chambre à déchets, en réponse à l'action de l'utilisateur ;
dans lequel le distributeur doseur (10) peut entrer en prise de manière séparable avec le bac à déchets (12, 24) et les doses (32) peuvent être délivrées dans la chambre à déchets sans ouvrir le bec verseur (22, 28).

3. Distributeur doseur pour un réservoir à déchets selon l'une quelconque des revendications précédentes, **caractérisé en ce que** l'additif pour bac à déchets est un additif désodorisant.

4. Distributeur doseur pour un réservoir à déchets selon la revendication 2 ou 3, **caractérisé en ce que** la partie inférieure (30B) est généralement cylindrique.

5. Distributeur doseur pour un réservoir à déchets selon l'une quelconque des revendications précédentes, **caractérisé en ce que** le distributeur doseur ferme le bec verseur (22, 28) lorsqu'il est en prise avec le bac à déchets (12, 24) pour empêcher les odeurs de s'échapper du bac à déchets (12, 24).

6. Distributeur doseur pour un réservoir à déchets selon la revendication 2, **caractérisé en ce que** l'utilisateur tourne la partie supérieure (30A) par rapport à la partie inférieure (30B) pour libérer la dose unique (32) dans la chambre à déchets.

7. Distributeur doseur pour un réservoir à déchets selon la revendication 2, **caractérisé en ce que** l'utilisateur appuie sur un bouton (38) que porte la partie supérieure (30A) pour libérer la dose unique (32) dans la chambre à déchets.

8. Distributeur doseur pour un réservoir à déchets selon la revendication 1, **caractérisé en ce que** le logement pour doses est porté d'un côté du bec verseur (22, 28) du bac à déchets (12, 24) et chaque dose (32) est dans l'alignement d'une ouverture ménagée dans le côté du bec verseur (22, 28).

9. Distributeur doseur pour un réservoir à déchets selon la revendication 8, **caractérisé en ce que** le bec verseur (22, 28) présente une pluralité d'ouvertures correspondant en nombre à la pluralité de doses (32) et étant dans l'alignement de celles-ci.
